# EUROPEAN PATENT APPLICATION

(11) **EP 4 414 240 A1**
(43) Date of publication of application: **14.08.2024**
(21) Application number: 22878257.9
(22) Date of filing: 06.09.2022
(51) Int. Cl.: B61L 25/02, G01M 17/08

(54) **INFORMATION PROCESSING DEVICE, INFORMATION PROCESSING METHOD, AND PROGRAM**

(30) Priority: 06.10.2021 JP 2021165026
(71) Applicant: Nihon University, Tokyo 102-8275 (JP); Kyosan Electric Mfg. Co., Ltd., Tsurumi-ku, Yokohama-shi Kanagawa 230-0031 (JP); National Agency For Automobile And Land Transport Technology, Shinjuku-ku Tokyo 160-0003 (JP)
(72) Inventor: TSUNASHIMA Hitoshi, Tokyo 102-8275 (JP); TAKATA Tetsuya, Yokohama-shi, Kanagawa 230-0031 (JP); OGINO Masayuki, Yokohama-shi, Kanagawa 230-0031 (JP); SATO Yasuhiro, Chofu-shi, Tokyo 182-0012 (JP); OGATA Seigo, Chofu-shi, Tokyo 182-0012 (JP)
(74) Representative: Regimbeau
(86) International application number: PCT/JP2022/033407
(87) International publication number: WO 2023/058386

(57) **Abstract**

An information processing device includes: a first generation unit configured to set a waveform of a wave representing changes of track displacement from a start point of a first track, on which a railway vehicle travels, to an end point of the first track as a track displacement waveform and generate a plurality of track displacement waveforms different from each other; a second generation unit configured to generate, for each of the plurality of track displacement waveforms generated by the first generation unit, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform; and a third generation unit configured to generate correspondence information representing a correlation between a magnitude of the track displacement and a magnitude of the vibration, based on the plurality of track displacement waveforms generated by the first generation unit and the vibration waveform generated for each of the plurality of track displacements by the second generation unit.

## Description

### [Technical Field]

The present invention relates to an information processing device, an information processing method, and a program.

Priority is claimed on Japanese Patent Application No. 2021-165026, filed October 06, 2021, the content of which is incorporated herein by reference.

### [Background Art]

Technologies for assisting with maintenance and inspection operations for tracks on which railway vehicles such as electric trains and the like travel have been researched and developed.

Relating to this, a railway track condition monitoring device that aquires information representing at least one of a vibration, a speed, an acceleration, a sound, reflected light, an image, a temperature, humidity, and a vehicle wheel diameter of a railway vehicle as information representing a condition of the railway vehicle, estimates track displacement of a track on which the railway vehicle travels based on this information that has been aquired, and provides the estimation result is known (see Patent Document 1).

### [Citation List]

### [Patent Document]

### [Patent Document 1]

Japanese Unexamined Patent Application, First Publication No. 2021-046191

### [Summary of Invention]

### [Technical Problem]

Here, in the railway track condition monitoring device described in Patent Document 1, track displacement is estimated using a model of machine learning. The reason for this is that, conventionally, it is not clearly known which of a vibration, a speed, an acceleration, a sound, reflected light, an image, a temperature, humidity, and a vehicle wheel diameter of a railway vehicle included in the information representing a state of the railway vehicle traveling on a certain track is strongly correlated with track displacement of the track. For this reason, in this railway track condition monitoring device, handling of this information representing conditions of the railway vehicle becomes complicated, and there are cases in which it is difficult to easily estimate track displacement.

Thus, the present invention is in consideration of the problems of the conventional technology described above and provides an information processing device, an information processing method, and a program capable of easily estimating track displacement with high accuracy.

### [Solution to Problem]

According to one aspect of the present invention, there is provided an information processing device including: a first generation unit configured to set a waveform of a wave representing changes of track displacement from a start point of a first track, on which a railway vehicle travels, to an end point of the first track as a track displacement waveform and generate a plurality of track displacement waveforms different from each other; a second generation unit configured to generate, for each of the plurality of track displacement waveforms generated by the first generation unit, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform; and a third generation unit configured to generate correspondence information representing a correlation between a magnitude of the track displacement and a magnitude of the vibration, based on the plurality of track displacement waveforms generated by the first generation unit and the vibration waveform generated for each of the plurality of track displacements by the second generation unit.

In addition, according to another aspect of the present invention, in the information processing device, a configuration in which an interval between the start point and the end point is divided into a plurality of sections, the first generation unit generates track displacement information representing track displacement of each of the plurality of sections for each of the plurality of generated track displacement waveforms, the second generation unit generates vibration information representing a magnitude of a vibration of each of the plurality of sections for each vibration waveform generated for each of the plurality of track displacement waveforms, and the third generation unit generates the correspondence information based on the track displacement information of each of the plurality of sections generated by the first generation unit and the vibration information of each of the plurality of sections generated by the second generation unit may be used.

Furthermore, according to another aspect of the present invention, in the information processing device, a configuration in which the first generation unit identifies a maximum value of the track displacement of each of the plurality of sections as track displacement of each of the plurality of sections, and the second generation unit identifies a maximum value of a magnitude of the vibration of each of the plurality of sections as a magnitude of the vibration of each of the plurality of sections may be used.

In addition, according to another aspect of the present invention, in the information processing device, a configuration in which the third generation unit generates information representing a regression curve as the correspondence information using a regression analysis based on a scatter diagram of the track displacement information of each of the plurality of sections generated by the first generation unit and the vibration information of each of the plurality of sections generated by the second generation unit may be used.

Furthermore, according to another aspect of the present invention, in the information processing device, a configuration in which the third generation unit uses Gaussian process regression as the regression analysis may be used.

In addition, according to another aspect of the present invention, in the information processing device, a configuration in which a storage unit configured to store the correspondence information is stored and an estimation unit configured to estimate the track displacement of each of the plurality of sections based on target vibration waveform information representing a waveform of a wave representing changes of a vibration estimated to be generated from the start point to the end point in traveling of a first railway vehicle on the first track and the correspondence information stored in the storage unit are included may be used.

Furthermore, according to another aspect of the present invention, in the information processing device, a configuration in which the first generation unit generates a plurality of track displacement waveforms for each of a plurality of mutually-different speeds of a railway vehicle traveling on the first track, the second generation unit generates the vibration waveform for each of the plurality of track displacement waveforms according to each of the plurality of speeds, and the third generation unit generates the correspondence information according to each of the plurality of speeds may be used.

In addition, according to another aspect of the present invention, there is provided an information processing method including: a first generation step of setting a waveform of a wave representing changes of track displacement from a start point of a first track, on which a railway vehicle travels, to an end point of the first track as a track displacement waveform and generating a plurality of track displacement waveforms different from each other; a second generation step of generating, for each of the plurality of track displacement waveforms generated in the first generation step, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform; and a third generation step of generating correspondence information representing a correlation between a magnitude of the track displacement and a magnitude of the vibration, based on the plurality of track displacement waveforms generated in the first generation step and the vibration waveform generated for each of the plurality of track displacements in the second generation step.

Furthermore, according to another aspect of the present invention, there is provided a program for causing a computer to execute: a first generation step of setting a waveform of a wave representing changes of track displacement from a start point of a first track, on which a railway vehicle travels, to an end point of the first track as a track displacement waveform and generating a plurality of track displacement waveforms different from each other; a second generation step of generating, for each of the plurality of track displacement waveforms generated in the first generation step, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform; and a third generation step of generating correspondence information representing a correlation between a magnitude of the track displacement and a magnitude of the vibration, based on the plurality of track displacement waveforms generated in the first generation step and the vibration waveform generated for each of the plurality of track displacements in the second generation step.

### [Advantageous Effects of Invention]

According to the present invention, estimation of track displacement can be easily performed with high accuracy.

### [Brief Description of Drawings]

FIG. 1 is a diagram illustrating an example of a configuration of an information processing system 1.
FIG. 2 is a diagram illustrating an example of a hardware configuration of an information processing device 30.
FIG. 3 is a diagram illustrating an example of a functional configuration of the information processing device 30.
FIG. 4 is a diagram illustrating an example of the flow of a process of the information processing device 30 generating correspondence information.
FIG. 5 is a diagram illustrating an example of a power spectrum density function generated based on each of three statistical property values representing statistical properties of changes of track displacement of a track R from a start point to an end point.
FIG. 6 is a diagram illustrating a track displacement waveform generated based on a power spectrum density function.
FIG. 7 is a diagram for describing a flow of generating a vibration waveform from a track displacement waveform.
FIG. 8 is a diagram illustrating an example of a part of a vibration waveform.
FIG. 9 is a diagram illustrating an example of a graph acquired by re-plotting a vibration waveform using an absolute value represented by vibration information.
FIG. 10 is a diagram illustrating an example of a scatter diagram generated by a third generation unit 364 in Step S230.
FIG. 11 is a diagram illustrating another example of a scatter diagram generated by the third generation unit 364 in Step S230.
FIG. 12 is a diagram illustrating an example of the flow of a process of the information processing device 30 estimating track displacement based on correspondence information.
FIG. 13 is a diagram illustrating track displacement in each section of a track R identified based on traveling information of a railway vehicle T.

### [Description of Embodiments]

### <Embodiment>

Hereinafter, an embodiment of the present invention will be described with reference to the drawings.

### <Overview of information processing device>

First, an overview of an information processing device according to this embodiment will be described.

The information processing device according to the embodiment includes a first generation unit, a second generation unit, and a third generation unit. The first generation unit sets a waveform of a wave representing changes of track displacement from a start point of a first track, on which a railway vehicle travels, to an end point of the first track as a track displacement waveform and generates a plurality of track displacement waveforms different from each other. The second generation unit generates, for each of the plurality of track displacement waveforms generated by the first generation unit, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform. The third generation unit generates correspondence information representing a correlation between a magnitude of the track displacement and a magnitude of the vibration based on the plurality of track displacement waveforms generated by the first generation unit and the vibration waveform generated for each of the plurality of track displacements by the second generation unit. In accordance with this, the information processing device can perform estimation based on correspondence information for track displacement of a first track. As a result, the information processing device can easily perform estimation of track displacement with high accuracy.

Hereinafter, the configuration of an information processing device according to an embodiment, a process of generating correspondence information among processes performed by this information processing device and a process of estimating track displacement based on the correspondence information among the processes performed by the information processing device will be described in detail.

### <Configuration of information processing system>

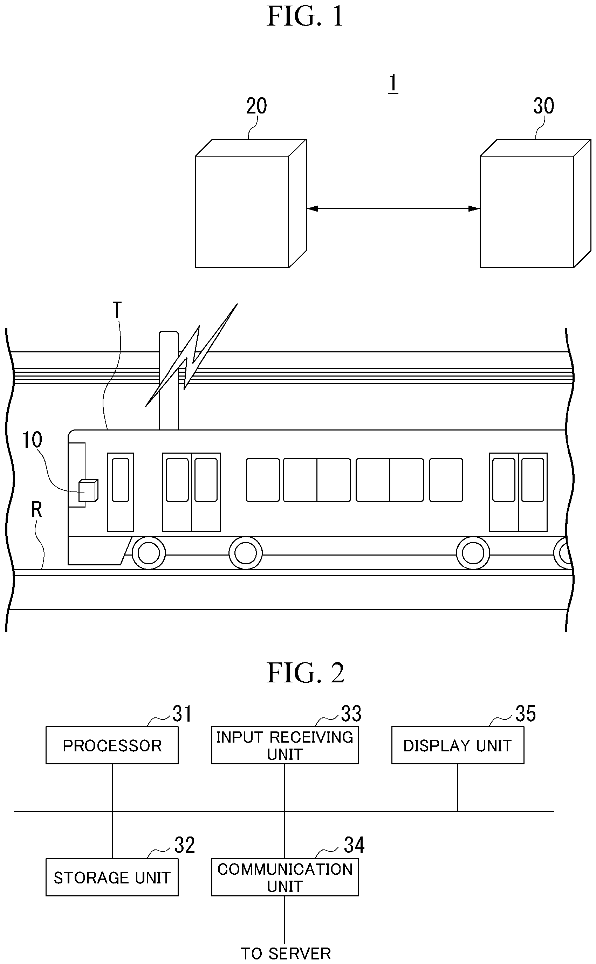

Hereinafter, as an example of an information processing system including an information processing device according to an embodiment, an information processing system 1 will be used as an example, and the configuration of this information processing system will be described. FIG. 1 is a diagram illustrating an example of the configuration of the information processing system 1.

The information processing system 1, for example, includes a measurement device 10, a server 20, and an information processing device 30. In the information processing system 1, some or all of the measurement device 10, the server 20, and the information processing device 30 may be integrally configured. In addition, the information processing system 1 may be configured to include other devices in addition to the measurement device 10, the server 20, and the information processing device 30.

The information processing system 1 virtually divides a section from a start point of a track on which a railway vehicle, in which the measurement device 10 is installed, travels to an end point of this track into a plurality of sections and estimates track displacement for each of the plurality of divided sections. Some or all of these plurality of sections may be either sections of the same distance or sections of mutually different distances. Hereinafter, as an example, a case in which these plurality of sections are sections of the same distance and are sections of 10 [m] will be described. In addition, each of these plurality of sections may be either a section of a distance shorter than 10 [m] or a section of a distance longer than 10 [m].

Track displacement estimated by the information processing system 1 may be any one of height displacement, route displacement, level displacement, inter-track displacement, and flatness displacement or may be a combination of some or all of height displacement, route displacement, level displacement, inter-track displacement, and flatness displacement. Hereinafter, as an example, a case in which track displacement estimated by the information processing system 1 is height displacement will be described.

Hereinafter, as an example, a case in which the measurement device 10 is installed in the railway vehicle T illustrated in FIG. 1 will be described. The railway vehicle T is an electric train. The railway vehicle T may be any vehicle in place of the electric train as long as it is a vehicle traveling on a track (for example, a rail or the like) such as a railcar, a new transportation system, or a monorail. Hereinafter, as an example, a case in which a track on which the railway vehicle T travels is a track R illustrated in FIG. 1 will be described. The track R may be any track as long as it is a track on which the railway vehicle T can travel. In other words, the information processing system 1 virtually divides a section from a start point of the track R to an end point of the track R into a plurality of sections and estimates track displacement for each of the plurality of divided sections. Hereinafter, for the convenience of description, a start point of the track R will be simply described as a start point. In addition, hereinafter, for the convenience of description, an end point of the track R will be simply described as an end point. The start point is a start point of a route that is a target for which the information processing system 1 estimates track displacement among routes on the track R. This route is composed of a plurality of sections of the track R described above. In addition, the end point is an end point of a route that is a target for which the information processing system 1 estimates track displacement among routes on the track R.

The information processing system 1 estimates a track displacement of each section from the start point to the end point based on traveling information of the railway vehicle T. Hereinafter, for the convenience of description, traveling information of a railway vehicle T will be simply referred to as traveling information.

The traveling information is information including measured value information representing various kinds of measured values measured by the measurement device 10, which is installed in the railway vehicle T, at the time of traveling of the railway vehicle T. In these various kinds of measured values, as a measured value representing a vibration at the time of traveling of the railway vehicle T in a direction determined in advance, an acceleration of the railway vehicle T at each time in the direction determined in advance is included. In addition, in these various kinds of measured values, a speed, an acceleration, and the like at each time when the railway vehicle T travels may be configured to be included. Furthermore, a measured value representing a vibration at the time of traveling of the railway vehicle T in a direction determined in advance may be another physical quantity that can represent this vibration in place of the acceleration. Hereinafter, for simplification of description, as an example, a case in which an acceleration of the railway vehicle T for a direction determined in advance at each time and a speed of the railway vehicle T at the time of traveling at each time are included as these various kinds of measured values will be described. Here, the direction determined in advance is a direction determined in accordance with a type of track displacement estimated by the information processing system 1 and may only one direction or two or more directions. In this example, the type of track displacement estimated by the information processing system 1 is a height displacement. For this reason, the direction determined in advance in this example is only an upward/downward direction (a vertical direction). Hereinafter, as an example, a case in which, in traveling information, in addition to measured value information representing the acceleration and measurement value information representing the speed, traveling identification information for identifying traveling of a railway vehicle T for each one time with traveling from a start point to an end point set as traveling of one time and position information representing a position at which the acceleration and the speed have been measured among positions on a track R are included will be described. In addition, hereinafter, as an example, a case in which, in measurement value information representing the acceleration, time information representing a time at which the acceleration has been measured is included will be described. Furthermore, hereinafter, as an example, a case in which, in measurement value information representing the speed, time information representing a time at which the speed has been measured is included will be described. In addition, hereinafter, for the convenience of description, the measurement value information representing the acceleration will be referred to as acceleration information, and the measurement value information representing the speed will be referred to as speed information.

In the information processing system 1, such traveling information is stored by the server 20. In addition, in the information processing system 1, traveling information stored in the server 20 is read from the server 20 by the information processing device 30. In the information processing system 1, the information processing device 30 estimates a track displacement based on the traveling information read from the server 20.

The measurement device 10 may be any device as long as it is a device that can measure various kinds of measured values described above (in this example, a device that can measure an acceleration, a speed, a position on a track R, and a current time). The measurement device 10, for example, may be a mobile terminal such as a multi-functional mobile phone (smartphone), a tablet PC (Personal Computer), or the like, an information processing device such as a laptop PC or the like in which sensors that can measure various kinds of measurement values are mounted, a dedicated device that measures various kinds of measurement values, or another device that can measure various kinds of measurement values.

The measurement device 10 is connected to the server 20 to be able to communicate with each other, for example, using radio communication through a wireless LAN such as Wi-Fi (registered trademark), a mobile communication network, or the like. In other words, the measurement device 10 is also a communication device that can perform radio communication with the server 20.

In the measurement device 10, for example, traveling identification information is registered in advance in accordance with an operation received from a user. The measurement device 10, at the time of traveling of the railway vehicle T, measures each of an acceleration of the railway vehicle T for each time for a direction determined in advance, a speed of the railway vehicle T for each time, and a position on the track R for each time with a predetermined sampling period. Every time when an acceleration and a speed are measured, the measurement device 10 generates traveling information based on a measured acceleration, a measured speed, a current time, a measured position on the track R, and traveling identification information registered in advance. In this example, when generating traveling information, the measurement device 10 calculates a distance from a start point to a current position among distances on the track R and identifies the calculated distance again as a position on the track R. The process of identifying this distance as a position on the track R again may be configured to be performed by the server 20, the information processing device 30, or the like in place of the measurement device 10. Every time when generating traveling information, the measurement device 10 transmits the generated traveling information to the server 20 and causes the server 20 to store the traveling information. Here, the start point described above is also a position at which the measurement device 10 starts measurement of various kinds of measurement values in the railway vehicle T that is traveling in the track R among positions on the track R. In addition, the end point is also a position at which the measurement device 10 ends measurement of various kinds of measurement values in the railway vehicle that is traveling in the track R among positions on the track R.

The server 20 may be any device as long as it is an information processing device that can be caused to function as a server. For example, the server 20 is a workstation, a desktop PC, or the like and is not limited thereto.

The server 20, for example, is connected to the measurement device 10 to be able to communicate with each other using radio communication through a wireless LAN such as Wi-Fi (a registered trademark), a mobile communication network, or the like. In other words, the server 20 is also a communication device that can perform radio communication with the measurement device 10. In addition, the server 20 is connected to the information processing device 30 to be able to communicate with each other using radio communication or wired communication. In other words, the server 20 is also a communication device that can perform radio communication or wired communication with the information processing device 30.

In a case in which traveling information transmitted from the measurement device 10 has been received, the server 20 stores the received traveling information. At this time, for each of traveling identification information included in this traveling information, the server 20 stores this traveling information together. In addition, in a case in which traveling identification information has been acquired from the information processing device 30 as a request for acquisition of traveling information, the server 20 transmits a plurality of traveling information including the acquired traveling identification information to the information processing device 30.

The information processing device 30, for example, is a workstation, a desktop PC, a laptop PC, a tablet PC, a multi-functional mobile phone terminal, a mobile phone terminal, a PDA (Personal Digital Assistant), or the like and is not limited thereto.

The information processing device 30 is connected to the server 20 to be able to communicate with each other using radio communication or wired communication. In other words, the information processing device 30 is also a communication device that can perform radio communication or wired communication with the server 20.

In accordance with an operation received from a user, the information processing device 30 transmits traveling identification information to the server 20 as a request for acquisition of traveling information. The information processing device 30, as a response to this request transmitted to the server 20, receives a plurality of traveling information including the traveling identification information transmitted as this request from the server 20. In a case in which these plurality of traveling information has been received, the information processing device 30 estimates a track displacement in each section on a track R based on the received these plurality of traveling information and correspondence information stored in advance.

Here, the correspondence information is information acquired through a simulation and is information representing a correlation between a magnitude of a track displacement and a magnitude of a vibration. More specifically, the correspondence information is information in which a track displacement in each section of a virtual track R and an acceleration representing a vibration estimated to be generated in a direction determined in advance in each section in a virtual railway vehicle traveling on the virtual track R in accordance with such a track displacement are associated with each other. In addition, the correspondence information, in place of the information acquired through a simulation, may be information in which a track displacement in each section of an actual track R and an acceleration representing a vibration estimated to be generated in a direction determined in advance in a railway vehicle traveling on the track R in accordance with such a track displacement are associated with each other. Furthermore, such a virtual railway vehicle or an actual railway vehicle may be the railway vehicle T or may be a railway vehicle different from the railway vehicle T as long as it is a railway vehicle that can travel in the track R. For example, the correspondence information is a function, a lookup table, or the like that, when an acceleration of the railway vehicle T in a certain section on a track R is input, outputs a track displacement associated with the input acceleration as a track displacement of this section.

The information processing device 30 generates such correspondence information in accordance with an operation received from a user. More specifically, the information processing device 30 sets a waveform of a wave representing changes of a track displacement from a start point to an end point as a track displacement waveform and virtually generates a plurality of track displacement waveforms different from each other. In other words, the information processing device 30 generate a plurality of these track displacement waveforms through simulations. A plurality of these track displacement waveforms are distinguished in accordance with differences in statistical properties of changes of a track displacement represented by each waveform. After generating a plurality of track displacement waveforms, the information processing device 30 generates a vibration waveform according to a track displacement waveform for each of the plurality of track displacement waveforms that have been generated. A vibration waveform according to a certain track displacement waveform is a waveform of a wave representing changes of an acceleration (that is, a vibration) estimated to be generated in a direction determined in advance from a start point to an end point in a railway vehicle virtually traveling in a track R in a case in which a waveform of a wave representing changes of a track displacement from a start point to an end point coincides with a waveform represented by this track displacement waveform. The information processing device 30 generates such a vibration waveform using a vehicle model. The vehicle model is a mathematical model (physical model) for a railway vehicle and, for example, is SIMPACK (a registered trademark) or the like and is not limited thereto. For example, in a case in which a vibration waveform corresponding to a certain track displacement waveform is generated, the information processing device 30 generates tentative correspondence information in which, for each section on a track R, a maximum value of a track displacement in the section and a maximum value of an absolute value of an acceleration in the section are associated with each other. The information processing device 30 generates such tentative correspondence information for each of all the track displacement waveforms. Then, the information processing device 30 generates a scatter diagram of a maximum value of a track displacement and a maximum value of an absolute value of an acceleration based on a plurality of tentative correspondence information generated for each of all the track displacement waveforms and performs a regression analysis based on the generated scatter diagram. As a result of this regression analysis, the information processing device 30 acquires a regression curve. The information processing device 30 generates information representing this regression curve as the correspondence information described above. In accordance with this, the information processing device 30 can easily estimate a track displacement with high accuracy using the generated correspondence information.

### <Hardware Configuration of Information Processing Device>

Hereinafter, a hardware configuration of the information processing device 30 will be described with reference to FIG. 2. FIG. 2 is a diagram illustrating an example of the hardware configuration of the information processing device 30.

The information processing device 30, for example, includes a processor 31, a storage unit 32, an input receiving unit 33, a communication unit 34, and a display unit 35. In addition, the information processing device 30 communicates with the server 20 through the communication unit 34. Such components are connected to be able to communicate with each other through a bus.

The processor 31, for example, is a CPU (Central Processing Unit). In addition, the processor 31 may be another processor such as a FPGA (Field Programmable Gate Array) in place of the CPU. The processor 31 executes various programs stored in the storage unit 32.

The storage unit 32, for example, includes a HDD (Hard Disk Drive), a SSD (Solid-State Drive), an EEPROM (Electrically Erasable Programmable Read Only Memory), a ROM (Read Only Memory), a RAM (Random-Access Memory), and the like. In addition, the storage unit 32 may be a storage device of an external-attachment type connected using a digital input/output port such as a USB (Universal Serial Bus) or the like instead of being built into the information processing device 30. The storage unit 32 stores various kinds of information, various kinds of images, an operation program, and the like processed by the information processing device 30.

The input receiving unit 33, for example, is an input device including a keyboard, a mouse, a touch pad, and the like and receives an input (operation) from a user.

The communication unit 34, for example, is configured to include a digital input/output port such as a USB, an Ethernet (registered trademark) port, and the like.

The display unit 35, for example, is a display device including a display.

### <Functional Configuration of Information Processing Device>

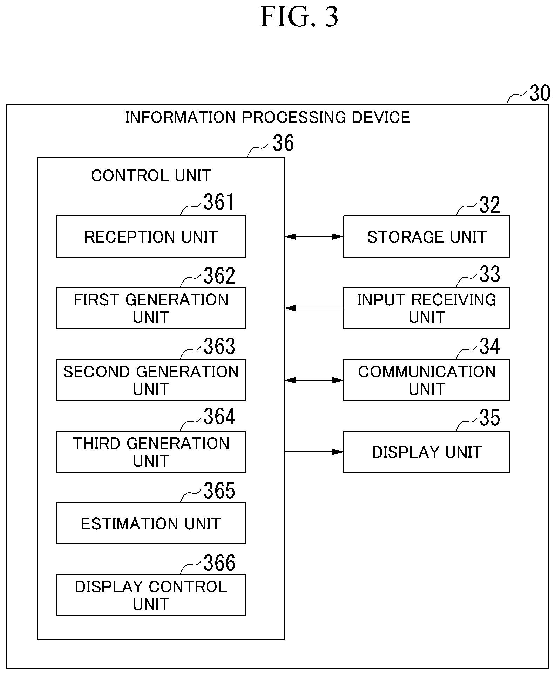

Hereinafter, a functional configuration of the information processing device 30 will be described with reference to FIG. 3. FIG. 3 is a diagram illustrating an example of the functional configuration of the information processing device 30.

The information processing device 30 includes a storage unit 32, an input receiving unit 33, a communication unit 34, a display unit 35, and a control unit 36.

The control unit 36 controls the entire information processing device 30. The control unit 36 includes a reception unit 361, a first generation unit 362, a second generation unit 363, a third generation unit 364, an estimation unit 365, and a display control unit 366. Such functional units included in the control unit 36, for example, are realized by the processor 31 executing various kinds of programs stored in the storage unit 32. In addition, at least one of these functional units may be hardware functional units such as a LSI (Large-Scale Integration), an ASIC (Application Specific Integrated Circuit), and the like.

In accordance with an operation received from a user, the reception unit 361 transmits traveling identification information to the server 20 as a request for acquisition of traveling information of a railway vehicle T and receives this traveling information including the traveling identification information transmitted as a response to this request.

The first generation unit 362 sets a waveform of a wave representing changes of a track displacement from a start point to an end point as a track displacement waveform and generates a plurality of track displacement waveforms representing mutually-different waveforms. In addition, for each of the plurality of track displacement waveforms that have been generated, the first generation unit 362 generates track displacement information representing a track displacement for each of a plurality of sections on the track R.

For each of a plurality of track displacement waveforms generated by the first generation unit 362, in a railway vehicle virtually traveling in a track R in a case in which a waveform of a wave representing a track displacement of a track R from a start point to an end point coincides with a waveform represented by the track displacement waveform, the second generation unit 363 generates a vibration waveform that is a waveform of a wave representing changes of a vibration estimated to be generated from the start point to the end point. In addition, for each vibration waveform generated for each of a plurality of track displacement waveforms, the second generation unit 363 generates vibration information representing a magnitude of a vibration for each of a plurality of sections.

The third generation unit 364 generates correspondence information representing a correlation between a magnitude of a track displacement and a magnitude of a vibration based on a plurality of track displacement waveforms generated by the first generation unit 362 and a vibration waveform generated for each of a plurality of track displacements by the second generation unit 363. More specifically, the third generation unit 364 generates correspondence information based on track displacement information for each of a plurality of sections generated by the first generation unit 362 and vibration information for each of a plurality of sections generated by the second generation unit 363.

The estimation unit 365 estimates a track displacement of each section on the track R based on traveling information received by the reception unit 361 and correspondence information stored in the storage unit 32 (that is, the correspondence information generated by the third generation unit 364).

The display control unit 366 generates various kinds of images in accordance with an operation received from a user. The display control unit 366 causes the display unit 35 to display generated images. For example, the display control unit 366 generates an image including information representing an estimation result acquired by the estimation unit 365 and causes the display unit 35 to display this generated image in accordance with an operation received from a user.

### <Process of Generating Correspondence Information>

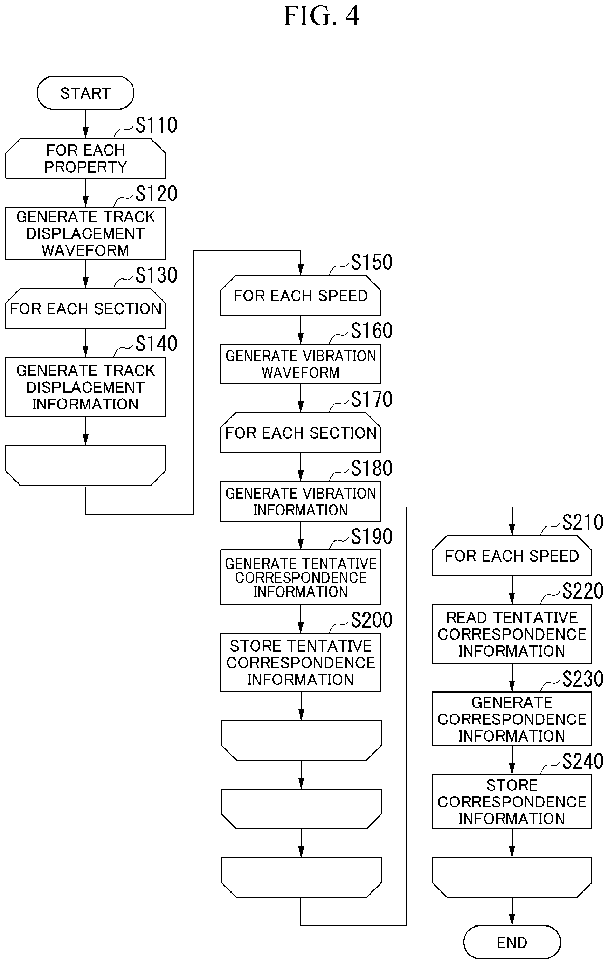

Hereinafter, the process of the information processing device 30 generating correspondence information will be described with reference to FIG. 4. FIG. 4 is a diagram illustrating an example of the flow of the process of the information processing device 30 generating correspondence information. Hereinafter, as an example, a case in which an operation for starting the process of generating correspondence information is received by the information processing device 30 at a timing before start of a process of Step S 110 represented in FIG. 4 will be described.

After an operation for starting the process of generating correspondence information is received by the information processing device 30, the first generation unit 362 repeatedly performs processes of Step S120 to Step S200 for each of a plurality of mutually-different statistical property values representing statistical properties of changes of a track displacement of the track R from a start point to an end point (Step S1 10). In FIG. 4, the process of Step S 110 is represented using "for each property". Here, each of the plurality of statistical property values is a quantity that represents a magnitude of unevenness of the track R. In Step S110, the first generation unit 362, for example, may be configured to generate a plurality of statistical property values corresponding to a number randomly determined in advance, may be configured to read information representing each of a plurality of statistical property values, which are stored in the storage unit 32 in advance, from the storage unit 32, or may be configured to identify a plurality of statistical property values using another method. Hereinafter, as an example, a case in which a plurality of statistical property values are three track conditions of 0.3 × 10⁻⁵ (the good track condition), 3 × 10⁻⁵ (a standard track condition), and 30 × 10⁻⁵ (the poor track condition) will be described. In addition, hereinafter, for the convenience of description, a statistical property value selected by the first generation unit 362 in Step S110 will be referred to as a target statistical property value in description.

After a target statistical property value is selected in Step S110, the first generation unit 362 calculates unevenness of the track R based on a power spectrum density function corresponding to a selected track condition. Then, the first generation unit 362 generates a waveform representing changes of a track displacement of the track R from the start point to the end point based on the calculated unevenness of the track R as a track displacement waveform (Step S120).

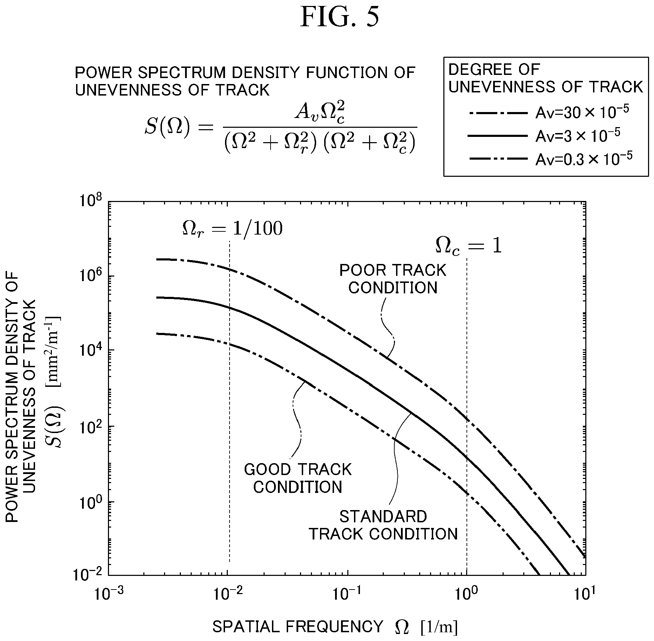

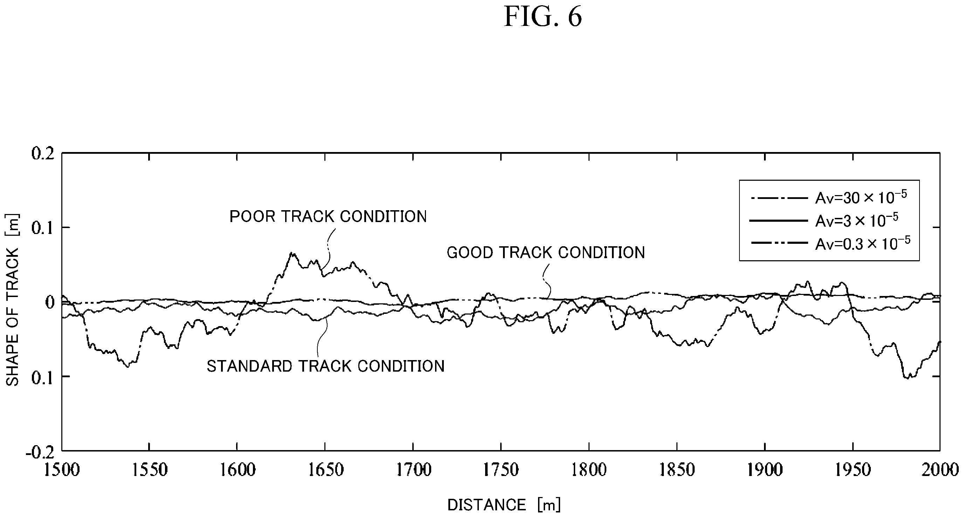

Here, FIG. 5 is a diagram illustrating an example of a power spectrum density function generated based on each of three statistical property values representing statistical properties of changes of a track displacement of a track R from a start point to an end point. In a graph illustrated in FIG. 5, a vertical axis represents a value of the power spectrum density function. In the graph, a horizontal axis represents a spatial frequency. FIG. 6 is a diagram illustrating a track displacement waveform generated based on the power spectrum density function. FIG. 6, in order to prevent complication of the drawing, illustrates three track displacement waveforms including a track displacement waveform based on a power spectrum density function calculated using 0.3×10⁻⁵ [m⁻¹] as a statistical property value representing a statistical property of changes of a track displacement of a track R from a start point to an end point, a track displacement waveform based on a power spectrum density function calculated using 3×10⁻⁵ [m⁻¹] as this statistical property waveform, and a track displacement waveform based on a power spectrum density function calculated using 30×10⁻⁵ [m⁻¹] as this statistical property waveform. In a graph illustrated in FIG. 6, a vertical axis represents a track displacement. In this graph, a horizontal axis represents a position on a track R by a distance from a start point. In other words, in this example, the track displacement waveform is a waveform representing changes of a track displacement according to a distance from a start point. A method for calculating a power spectrum density function based on a statistical property value representing a statistical property of changes of a track displacement of a track R from a start point to an end point may be either a known method or a method to be developed from now on. In addition, a method for generating a track displacement waveform based on a power spectrum density function may be either a known method or a method to be developed from now on. For this reason, in this embodiment, description of these two methods will be omitted.

After the process of Step S120 is performed, the first generation unit 362 divides a range from a start point to an end point into the plurality of sections described above and, for each divided section, repeatedly performs the process of Step S 140 (Step S130). Hereinafter, for the convenience of description, a section selected by the first generation unit 362 in Step S 130 will be referred to as a target section in description. In Step S130, the first generation unit 362, for example, selects one of a plurality of these sections in order from the start point side as a target section at each time. The first generation unit 362 may be configured to randomly select one of a plurality of these sections as a target section at each time or may be configured to select one thereof as a target section at each time using another method. In addition, the first generation unit 362 may be configured to perform at least one of repetitive processes repeated in Step S130 to Step S 140 in parallel.

After a target section is selected in Step S130, the first generation unit 362 identifies a maximum value of a track displacement in the target section based on the track displacement waveform generated in Step S120 and the 10 m chord positive ordinate method, and generates information representing the identified maximum value as a track displacement information of the target section (Step S140). Here, when the 10 m chord versine method is simply described, it is a method in which a chord of 10 m is caused to be in a condition in which it is extended without being bent on a track R such that at least a part of the chord of 10 m is positioned within the target section, and a distance of a straight line extending vertically downward from a middle position of the chord to the track R is measured as a displacement. In the 10 m chord versine method, while this chord is shifted with being in the extended condition, a position at which this displacement becomes a maximum is identified, and this displacement at the identified position is identified as a maximum value of the track displacement in the target section. Since the 10 m chord versine method is a well-known method, in this embodiment, further detailed description will be omitted. In addition, in Step S140, the first generation unit 362 may be configured to identify a maximum value of the track displacement in a target section using another method instead of the 10 m chord versine method. For example, the first generation unit 362 may be configured to identify this maximum value using the chord versine method using a chord of a distance shorter than 10 m or may be configured to identify this maximum value using a chord versine method using a chord of a distance longer than 10 m.

After performing the process of Step S140, the first generation unit 362 causes the process to transit to Step S130 and selects the next section as the target section. After performing the process of Step S140, in a case in which there are no remaining sections that can be selected as the next target section, the first generation unit 362 ends the repetitive process of Step S130 to Step S140 and causes the process to transit to Step S150.

After the repetitive processes of Step S130 to Step S140 are ended by the first generation unit 362, the second generation unit 363 repeatedly performs the processes of Step S160 to Step S200 for each of a plurality of speeds determined in advance as speeds of railway vehicles virtually traveling in the track R (Step S150). Hereinafter, as an example, a case in which a plurality of these speeds are 30 km/h, 40 km/h, 50 km/h, 60 km/h, 70 km/h, 80 km/h will be described. In addition, hereinafter, for the convenience of description, a speed selected by the second generation unit 363 in Step S150 will be referred to as a target speed in description.

After selecting the target speed in Step S150, the second generation unit 363 generates a vibration waveform in a case in which a virtual railway vehicle represented by a vehicle model is caused to virtually travel in a track R from a start point to an end point with a target speed based on the selected target speed, the track displacement waveform generated in Step S120, and the vehicle model (Step S160). Here, in this case, this vibration waveform is a waveform of a wave representing changes of a vibration estimated to be generated in a railway vehicle of a target speed from a start point to an end point in a case in which a waveform of a wave representing a track displacement of a track R from the start point to the end point coincides with a waveform represented by this track displacement waveform. In addition, this vibration is a vibration for the direction determined in advance described above. In other words, in Step S160, the second generation unit 363 generates a vibration in this railway vehicle by causing this railway vehicle to virtually travel with a target speed in a virtual track R having a track displacement of a waveform represented by this track displacement waveform and generates a vibration waveform representing changes from the start point to the end point of the vibration. In addition, in this example, the vibration of this railway vehicle for the direction determined in advance is represented by an acceleration of this railway vehicle for this direction. In other words, in this example, the vibration waveform is a waveform of an acceleration of this railway vehicle for a direction determined in advance.

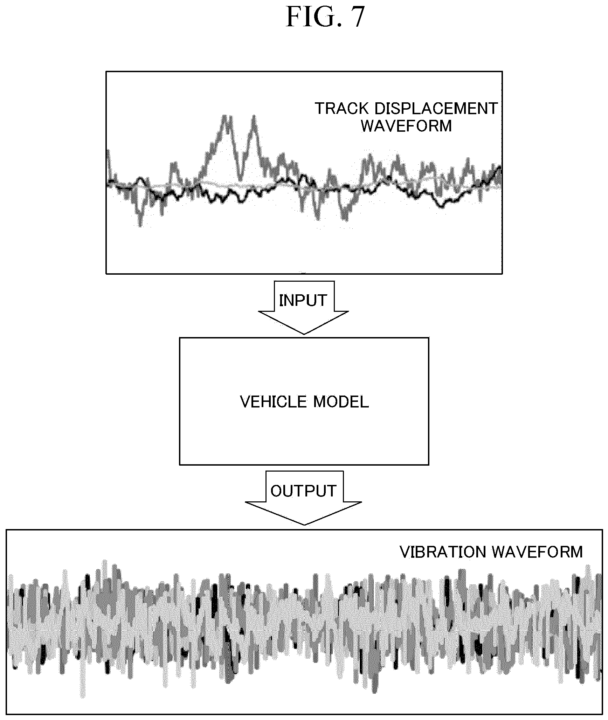

FIG. 7 is a diagram for describing a flow of generating a vibration waveform from a track displacement waveform. As illustrated in FIG. 7, the second generation unit 363 inputs the track displacement waveform to a vehicle model. In accordance with this, the second generation unit 363 causes this railway vehicle to virtually travel with a target speed in a virtual track R having a track displacement of a waveform represented by the track displacement waveform. As a result, the vehicle model outputs a vibration waveform representing changes from a start point to an end point of the vibration. In this way, in Step S160, the second generation unit 363 generates a vibration waveform corresponding to a track displacement waveform generated in Step S120.

After performing the process of Step S160, the second generation unit 363 repeatedly performs processes of Step S180 to Step S200 for each of a plurality of sections divided by the first generation unit 362 in Step S130 (Step S170). In addition, hereinafter, for the convenience of description, a section selected by the second generation unit 363 in Step S170 will be referred to as a target section in description. In Step S170, the second generation unit 363, for example, selects one of a plurality of sections each time as a target section in order from the start point side. In addition, the second generation unit 363 may be configured to randomly select one of a plurality of these sections each time as a target section or may be configured to select one thereof as a target section using another method. Furthermore, the second generation unit 363 may be configured to perform some or all of the repetitive processes repeated in Steps S170 to Step S200 in parallel.

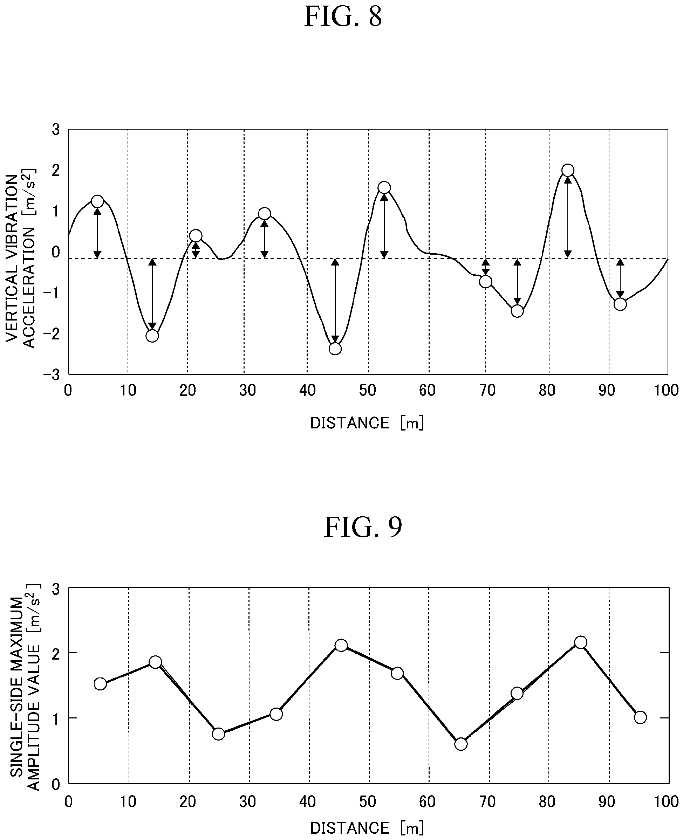

After selecting the target section in Step S170, the second generation unit 363 generates vibration information based on the vibration waveform generated in Step S160 and the target section selected in Step S170 (Step S180). More specifically, in Step S180, the second generation unit 363 extracts a waveform representing an acceleration (a vibration) at each position within the target section in this vibration waveform and identifies a maximum value of an absolute value of an acceleration (that is, a magnitude of a vibration) within the target section based on the extracted waveform. Then, the second generation unit 363 generates information representing the identified absolute value as vibration information. FIG. 8 is a diagram illustrating an example of a vibration waveform. In a graph illustrated in FIG. 8, a vertical axis represents an acceleration, that is, a vibration. In this graph, a horizontal axis represents a position on a track R in accordance with a distance from a start point. Each arrow represented in FIG. 8 represents a position at which the absolute value of the acceleration becomes a maximum in each section illustrated in FIG. 8. In Step S180, the second generation unit 363 identifies a position at which the absolute value of the acceleration in a target section becomes a maximum. Then, the second generation unit 363 generates information representing the absolute value of an acceleration at the identified position as vibration information of the target section. FIG. 9 is a diagram illustrating an example of a graph acquired by re-plotting a vibration waveform using an absolute value represented by vibration information. In a graph illustrated in FIG. 9, a vertical axis represents an absolute value of an acceleration, that is, a magnitude of a vibration. In this graph, a horizontal axis represents a position on a track R in accordance with a distance from a start point. In this graph, at a middle point of each section, a maximum value of the absolute value of an acceleration in the section is plotted. For this reason, in this graph, intensities of vibrations in sections can be compared with each other.

Next, the second generation unit 363 identifies track displacement information of the target section selected in Step S 170 in the track displacement information generated in the repetitive processes of Step S130 to Step S140. Then, the second generation unit 363 generates information in which the identified track displacement information and the vibration information generated in Step S180 are associated with each other as tentative correspondence information (Step S190).

Next, the second generation unit 363 stores the tentative correspondence information generated in Step S190 in the storage unit 32 (Step S200). At this time, the second generation unit 363 stores the tentative correspondence information in the storage unit 32 with speed information representing the target speed selected in Step S150 being associated with the tentative correspondence information.

After performing the process of Step S200, the second generation unit 363 causes the process to transit to Step S170 and selects a next section as the target section. In addition, after performing the process of Step S200, in a case in which there are no remaining sections that can be selected as a next target section, the second generation unit 363, after ending the repetitive processes of Step S170 to Step S200, causes the process to transit to Step S150 and selects a next speed as the target speed. In addition, after ending the repetitive processes of Step S170 to Step S200, in a case in which there are no remaining speeds that can be selected as a next target speed, after the second generation unit 363 ends the repetitive processes of Step S150 to Step S200, the first generation unit 362 causes the process to transit to Step S110 and selects a next statistical property value as a target statistical property value. In addition, after the repetitive processes of Step S150 to Step S200 are ended by the second generation unit 363, in a case in which there are no remaining statistical property values that can be selected as a next target statistical property value, the first generation unit 362 ends the repetitive processes of Step S110 to Step S200.

After the repetitive processes of Step S110 to Step S200 are ended by the first generation unit 362, the third generation unit 364 repeatedly performs processes of Step S220 to Step S240 for each of a plurality of speeds determined in advance as speeds of a railway vehicle virtually traveling in a track R (Step S210). Here, the plurality of these speeds are a plurality of speeds that are the same as a plurality of speeds that are targets selected as target speeds by the second generation unit 363 in Step S150. Hereinafter, for the convenience of description, a speed selected by the third generation unit 364 in Step S210 will be referred to as a target speed in description.

After selecting a target speed in Step S210, the third generation unit 364 reads all of a plurality of tentative correspondence information associated with speed information representing a selected target speed from the storage unit 32 (Step S220).

Next, the third generation unit 364 generates a scatter diagram in which each of a plurality of tentative correspondence information read in Step S220 is plotted on a graph having a vertical axis representing a track displacement of a track R and a horizontal axis representing an absolute value of an acceleration. Then, the third generation unit 364 performs regression analysis based on the generated scatter diagram, calculates a regression curve, and generates information representing the calculated regression curve as correspondence information (Step S230). Here, the third generation unit 364, for example, calculates a regression curve using a Gaussian process regression as the regression analysis. In addition, the third generation unit 364 may be configured to calculate a regression curve using another regression analysis such as linear regression or the like. Since the Gaussian process regression is a well-known regression analysis, detailed description thereof will be omitted in this embodiment.

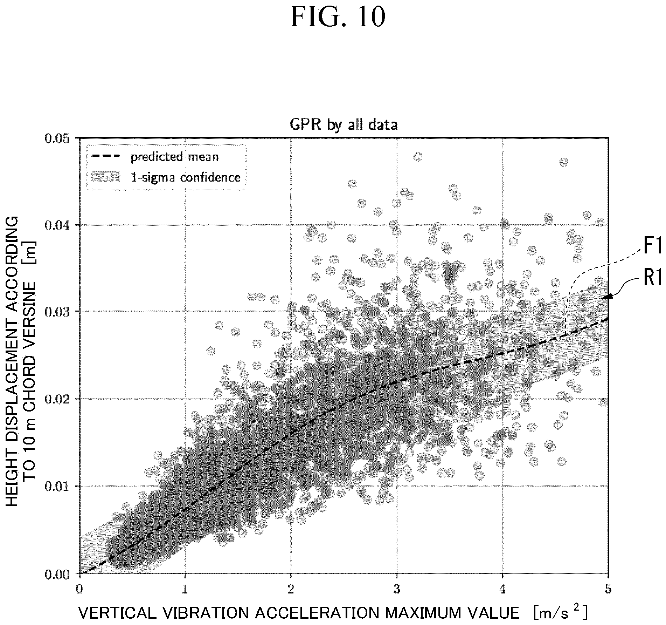

FIG. 10 is a diagram illustrating an example of a scatter diagram generated by the third generation unit 364 in Step S230. In a graph illustrated in FIG. 10, a vertical axis represents a track displacement of a track R. In this graph, a horizontal axis represents the absolute value of an acceleration. A plurality of circles on this graph represents tentative correspondence information plotted on this graph. This graph represents that there is a correlation between a track displacement of the track R and the absolute value of an acceleration (the magnitude of a vibration) generated in a direction determined in advance in a railway vehicle traveling on the track R. Conventionally, the reason for presence/absence of this correlation not being clear is considered to be a dispersion of each plot in this scatter diagram being large. A dotted line F1 on this graph represents a regression curve acquired as a result of a Gaussian process regression based on this scatter diagram. A hatched area R1 is an error range of a regression curve represented by the dotted line F1 and represents an error range of ±1σ having σ as a standard deviation and having a value of the regression curve as its central value. In addition, a distribution of the plot on the scatter diagram and the shape of the regression curve change in accordance with a speed selected as a target speed in Step S210. The distribution of the plot on the scatter diagram illustrated in FIG. 10 and the shape of the regression curve are a distribution and a shape of a case in which the target speed is [60 km/h] .

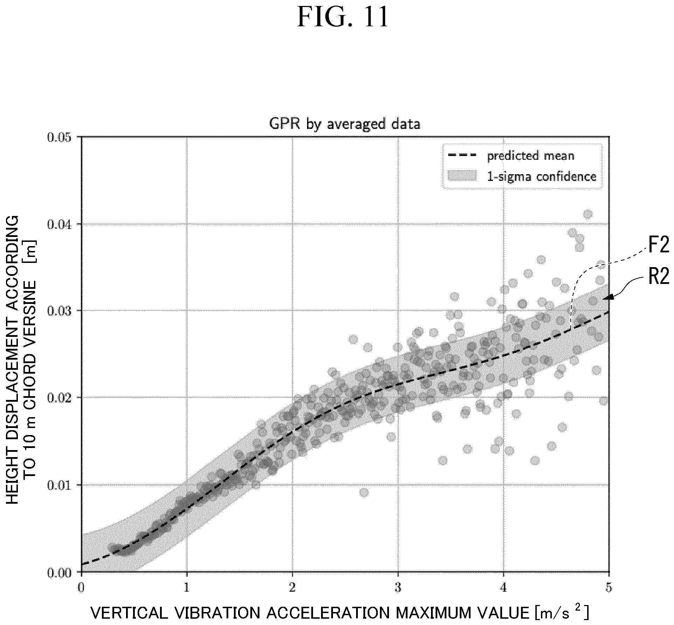

In addition, when the number of plots on the scatter diagram is increased, a time required for a regression analysis becomes longer. Thus, in order to shorten a time required for a regression analysis, the third generation unit 364 may be configured to divide the horizontal axis of the scatter diagram into bins of a predetermined interval and gather average values of track displacements corresponding to a plurality of plots included within ranges of the bins as plots of the bins into one. In this case, the scatter diagram illustrated in FIG. 10 becomes a scatter diagram illustrated in FIG. 11. FIG. 11 is a diagram illustrating another example of a scatter diagram generated by the third generation unit 364 in Step S230. In the example illustrated in FIG. 11, the predetermined interval is 0.1 [m/s²]. In accordance with this, the third generation unit 364 can shorten a time required for a regression analysis. In a graph illustrated in FIG. 11, a vertical axis represents a track displacement of a track R. In this graph, a horizontal axis represents the absolute value of an acceleration. A plurality of circles on this graph represents tentative correspondence information that is averaged and then plotted on this graph. A dotted line F2 on this graph represents a regression curve acquired as a result of Gaussian process regression based on this scatter diagram. A hatched area R2 is an error range of a regression curve represented by the dotted line F2 and represents an error range of ±1σ having σ as a standard deviation and having a value of the regression curve as its central value.

The correspondence information representing the regression curve acquired as described above is information that represents a correlation between the magnitude of a track displacement and the magnitude of a vibration. In other words, this correspondence information is information in which, for each acceleration of a railway vehicle for a direction determined in advance, the acceleration and a track displacement of a track R estimated to have generated the acceleration are associated with each other. As described above, this correspondence information, for example, is a function, a lookup table, or the like that, when an acceleration of a railway vehicle for a direction determined in advance is input, outputs a track displacement of a track R associated with the input acceleration.

After the process of Step S230 is performed, the third generation unit 364 stores the correspondence information generated in Step S230 in the storage unit 32 (Step S240). At this time, the third generation unit 364 stores this correspondence information in the storage unit 32 with speed information representing the target speed selected in Step S210 being associated with this correspondence information. Thereafter, the third generation unit 364 causes the process to transit to Step S210 and selects a next speed as a target speed. In addition, after the process of Step S240 is performed, in a case in which there are no remaining speed that can be selected as a next target speed, the third generation unit 364 ends repetitive processes of Step S210 to Step S240 and ends the process of the flowchart illustrated in FIG. 4.

As described above, the information processing device 30 generates a plurality of mutually-different track displacement waveforms by setting a waveform of a wave representing changes of a track displacement from a start point to an end point as a track displacement waveform, generates a vibration waveform that is a waveform of a wave representing changes of a vibration estimated to be generated from the start point to the end point in a railway vehicle virtually traveling in a track R in a case in which, for each of the plurality of track displacement waveforms that have been generated, a waveform of a wave representing a track displacement of a track R from the start time to the end time coincides with a waveform represented by the track displacement waveform, and generates correspondence information representing a correlation between the magnitude of a track displacement and the magnitude of a vibration based on the plurality of track displacement waveforms that has been generated and a vibration waveform generated for each of a plurality of track displacements. In accordance with this, the information processing device 30 can easily estimate a track displacement with high accuracy based on the generated correspondence information.

In addition, in a case in which information in which a track displacement and the magnitude of a vibration of a track inspection vehicle are associated with each other (that is, tentative correspondence information that is actually measured by the track inspection vehicle) has been acquired at a timing before the process of Step S110 for each of a plurality of sections on the track R as information measured by the track inspection vehicle, the information processing device 30 may be configured to additionally plot this information in the scatter diagram described above in Step S230. Also in this case, by using a process similar to the process of Step S230 described above, the information processing device 30 can calculate a regression curve based on the Gaussian process regression. In this case, compared to a case in which this information is absent, estimation accuracy of a correlation represented by the calculated regression curve is improved. In other words, by using this information, the information processing device 30 can generate correspondence information that enables estimation of a track displacement with higher accuracy.

In addition, in a case in which the speed of the railway vehicle T from the start point to the end point is constant (or approximately constant) and is known, the information processing device 30 may be configured to perform processes of Step S160 to Step S200 once without performing the repetitive processes of Step S150 to Step S200. In this case, a speed used in the processes of Step S160 to Step S200 is the speed of the railway vehicle T. In addition, in this case, the information processing device 30 does not performed repetitive processes of Step S210 to Step S240 and performs processes of Step S220 to Step S240 once in place thereof. In this case, in Step S240, the speed of the railway vehicle T is constant and is known, and thus the information processing device 30 may be configured to associate speed information with the correspondence information or may be configured not to associate speed information with the correspondence information.

### <Process of Estimating Track Displacement based on Correspondence Information>

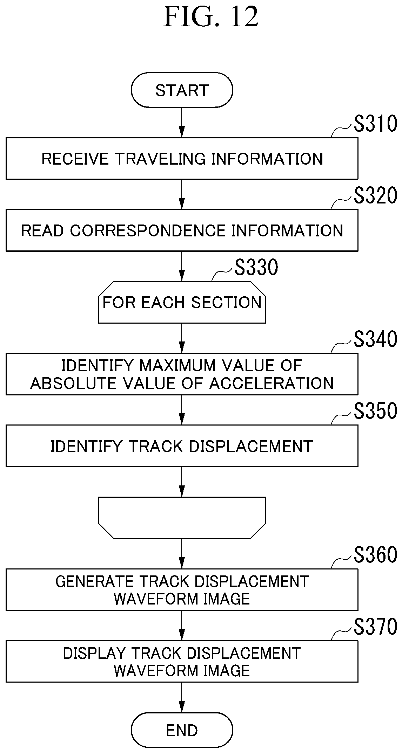

Hereinafter, a process of the information processing device 30 estimating a track displacement based on correspondence information will be described with reference to FIG. 12. FIG. 12 is a diagram illustrating an example of the flow of the process of the information processing device 30 estimating a track displacement based on correspondence information. Hereinafter, as an example, a case in which an operation for starting estimation of a track displacement of a track R based on traveling information of a railway vehicle T is received by the information processing device 30 at a timing before start of the process of Step S310 illustrated in FIG. 12 will be described. Hereinafter, as an example, a case in which the information processing device 30 transmits a request for acquisition of this traveling information to the server 20 at this timing in accordance with this operation will be described. In addition, hereinafter, a case in which correspondence information is stored in the storage unit 32 in accordance with the process of the flowchart illustrated in FIG. 4 at this timing will be described.

After the request for acquisition of traveling information is transmitted to the server 20, the reception unit 361 receives a plurality of traveling information including traveling identification information transmitted as this request as a response to this request (Step S310).

Next, the estimation unit 365 reads the correspondence information from the storage unit 32 based on the plurality of traveling information that have been received by the reception unit 361 in Step S310 (Step S320). More specifically, the estimation unit 365 identifies a speed represented by the speed information in information included in each of the plurality of traveling information. Then, for example, in a case in which a plurality of speeds that have been identified are the same speed, the estimation unit 365 reads correspondence information associated with speed information representing a speed that is the closest to such a speed from the storage unit 32. On the other hand, for example, in a case in which a plurality of speeds that have been identified are mutually-different speeds, the estimation unit 365 calculates an average value of such speeds. Then, the estimation unit 365 reads correspondence information associated with speed information representing a speed that is the closest to the calculated average value from the storage unit 32.

Next, the estimation unit 365 divides a range from the start point to the end point into a plurality of sections of the same distance and repeatedly performs processes of Step S340 to Step S350 for each divided section (Step S330). Here, a distance of each of a plurality of these sections, as represented in Step S130 illustrated in FIG. 4, may be 10 [m], may be a distance shorter than 10 [m], or may be a distance longer than 10 [m]. Hereinafter, for the convenience of description, a section selected by the estimation unit 365 in Step S330 will be referred to as a target section in description. In Step S330, the estimation unit 365, for example, selects one of the plurality of these sections in order from the start time side each time as a target section. In addition, the estimation unit 365 may be configured to randomly select one of the plurality of these sections as a target section each time or may be configured to select one thereof as a target section each time using another method. Furthermore, the estimation unit 365 may be configured to perform some or all of repetitive processes repeated in Step S330 to Step S350 in parallel.

After selecting the target section in Step S330, the estimation unit 365 identifies a maximum value of the absolute value of the acceleration of the railway vehicle T for a direction determined in advance in the selected target section based on the traveling information received in step S310. Then, the estimation unit 365 identifies the maximum value that has been identified as the maximum value of the absolute value of the acceleration of the target section (that is, a maximum value of the magnitude of a vibration, which has been generated in the direction determined in advance, of the railway vehicle T in the target section) (Step S340).

Next, the estimation unit 365 identifies (estimates) a track displacement of the track R in the target section based on the correspondence information read in Step S320 and the maximum value of the absolute value of the acceleration identified in Step S340 (Step S350). In other words, the estimation unit 365 identifies this track displacement associated with the maximum value of the absolute value of the acceleration based on this correspondence information in Step S350.

After the process of Step S350 is performed, the estimation unit 365 causes the process to transit to Step S330 and selects a next section as a target section. After the process of Step S350 is performed, in a case in which there are no remaining sections that can be selected as a next target section, the estimation unit 365 ends repetitive processes of Step S330 to Step S350 and causes the process to transit to Step S360.

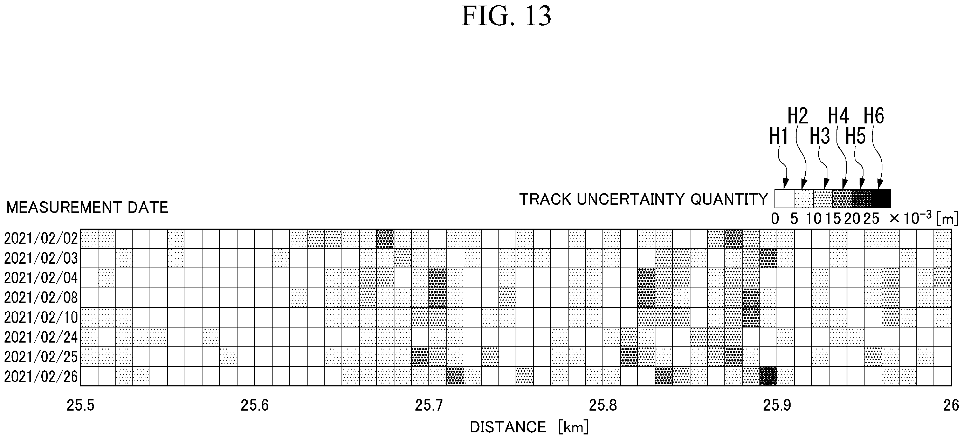

In this way, the estimation unit 365 can identify (estimate) a track displacement in each section from the start point to the end point using the repetitive processes of Step S330 to Step S350. FIG. 13 is a diagram illustrating a track displacement in each section of a track R identified based on traveling information of a railway vehicle T. In FIG. 13, a graph representing track displacements in each section of a track R identified based on traveling information of the railway vehicle T on Feb. 2, 2021, Feb. 3, 2021, Feb. 4, 2021, Feb. 8, 2021, Feb. 10, 2021, Feb. 24, 2021, Feb. 25, 2021, and Feb. 26, 2021 is illustrated. In this graph, a horizontal axis represents a position on the track R using a distance from a start point. On this graph, each hatched area corresponds to each section from a start point to an end point corresponds to each section from the start point to the end point. A hatching H1 represents a section in which a track displacement is included within a range equal to or larger than 0 [m] and less than 3×10⁻³ [m]. A hatching H2 represents a section in which a track displacement is included within a range equal to or larger than 3×10⁻³ [m] and less than 10×10⁻³ [m]. A hatching H3 represents a section in which a track displacement is included within a range equal to or larger than 10×10⁻³ [m] and less than 15×10⁻³ [m]. A hatching H4 represents a section in which a track displacement is included within a range equal to or larger than 15×10⁻³ [m] and less than 20×10⁻³ [m]. A hatching H5 represents a section in which a track displacement is included within a range equal to or larger than 20×10⁻³ [m] and less than 25×10⁻³ [m]. A hatching H6 represents a section in which a track displacement is included within a range equal to or larger than 25×10⁻³ [m]. Referring to FIG. 13, it can be understood that there are sections in which a track displacement increases between a position of 25.7 [km] from the start point among positions on the track R and a position of 25.8 [km] from the start point among the positions on the track R and between a position of 25.8 [km] from the start point among the positions on the track R and a position of 25.9 [km] from the start point among the positions on the track R. In accordance with this, a user of the information processing device 30 can easily identify a place at which the track displacement is large relative to the periphery as a place having a high possibility of an occurrence of a degradation in the track R. Since this identifying is performed based on correspondence information representing a correlation between a track displacement and the magnitude of a vibration, the reliability is high relative to a case in which a model of machine learning in which a process of deriving an estimation result is configured as a black box is used. In addition, the reason for a section in which the track displacement becomes large being included in a certain range is considered to be the accuracy of a GPS used for identifying the position of the railway vehicle T not being high. For this reason, in accordance with improvement of accuracy of position identification of a global positioning system (GPS) used by the measurement device 10 or the like, the information processing device 30 can identify a section in which the track displacement is high with further higher accuracy.

After the estimation unit 365 ends the repetitive processes of Step S330 to Step S350, the display control unit 366 generates a track displacement waveform image including an image representing a waveform representing changes of a track displacement of the track R from the start point to the end point based on the track displacement of each section identified by the estimation unit 365 using the repetitive processes of Step S330 to Step S350 (Step S360). The track displacement waveform image may be any image as long as it is an image including this image. For example, the track displacement waveform image may be an image that includes the graph illustrated in FIG. 13.

The display control unit 366 displays the track displacement waveform image generated in Step S360 in the display unit 35 and ends the process of the flowchart illustrated in FIG. 12.

As described above, the information processing device 30 estimates a track displacement of each section of the track R based on the correspondence information stored in the storage unit 32 in advance and the traveling information of the railway vehicle T received from the server 20. In accordance with this, the information processing device 30 can cause a maintenance operation of the track R to be efficient based on the estimated track displacement of each section of the track R.

As described above, an information processing device according to this embodiment (in the example described above, the information processing device 30) includes: a first generation unit (in the example described above, the first generation unit 362) configured to set a waveform of a wave representing changes of a track displacement from a start point of a first track (in the example described above, the track R), in which a railway vehicle (in the example described above, a railway vehicle represented by a vehicle model) travels, to an end point of the first track as a track displacement waveform and generate a plurality of track displacement waveforms different from each other; a second generation unit (the second generation unit 363) configured to generate, for each of the plurality of track displacement waveforms generated by the first generation unit, a vibration waveform that is a waveform of a wave representing changes of a vibration estimated to be generated from the start point to the end point in a railway vehicle virtually traveling in the first track in a case in which the waveform of the wave representing the track displacement of the first track from the start point to the end point coincides with the waveform represented by the track displacement waveform; and a third generation unit (in the example described above, the third generation unit 364) configured to generate correspondence information representing a correlation between a magnitude of the track displacement and a magnitude of the vibration, based on the plurality of track displacement waveforms generated by the first generation unit and the vibration waveform generated for each of the plurality of track displacements by the second generation unit. In accordance with this, the information processing device can easily estimate a track displacement with high accuracy.

In addition, in the information processing device, a configuration in which an interval between the start point and the end point is divided into a plurality of sections, the first generation unit generates track displacement information representing a track displacement of each of the plurality of sections for each of the plurality of generated track displacement waveforms, the second generation unit generates vibration information representing a magnitude of a vibration of each of the plurality of sections for each vibration waveform generated for each of the plurality of track displacement waveforms, and the third generation unit generates the correspondence information based on the track displacement information of each of the plurality of sections generated by the first generation unit and the vibration information of each of the plurality of sections generated by the second generation unit may be used. In accordance with this, by adjusting a distance of each of a plurality of sections, the information processing device can perform shortening of a time required for generation of correspondence information, improvement of reliability of a correlation represented by the correspondence information, and the like.

Furthermore, in the information processing device, a configuration in which the first generation unit identifies a maximum value of the track displacement of each of the plurality of sections as a track displacement of each of the plurality of sections, and the second generation unit identifies a maximum value of a magnitude of the vibration of each of the plurality of sections as a magnitude of the vibration of each of the plurality of sections may be used. In accordance with this, the information processing device can inhibit a track displacement estimated based on correspondence information from being underestimated.

In addition, in the information processing device, a configuration in which the third generation unit generates information representing a regression curve as the correspondence information using a regression analysis based on a scatter diagram of the track displacement information of each of the plurality of sections generated by the first generation unit and the vibration information of each of the plurality of sections generated by the second generation unit may be used. In accordance with this, the information processing device can explicitly represent a correlation between a track displacement and the magnitude of a vibration and estimate a track displacement of each section on a first track using the magnitude of the vibration of the railway vehicle. This leads to simplification of estimation of a track displacement, which is desirable.

Furthermore, in the information processing device, a configuration in which the third generation unit uses Gaussian process regression as the regression analysis may be used. In accordance with this, the information processing device can generate correspondence information that realizes estimation with higher accuracy for a track displacement compared to a case in which linear regression is used.

In addition, in the information processing device, a configuration in which a storage unit (in the example described above, the storage unit 32) in which the correspondence information is stored and an estimation unit (in the example described above, the estimation unit 365) configured to estimate the track displacement of each of the plurality of sections based on target vibration waveform information representing a waveform of a wave representing changes of a vibration estimated to be generated from the start point to the end point in traveling of a first railway vehicle (in the example described above, the railway vehicle T) in the first track and the correspondence information stored in the storage unit are included may be used. In accordance with this, the information processing device can cause a maintenance operation of a first track to be efficient based on the estimated track displacement of each section on the first track.

Furthermore, in the information processing device, a configuration in which the first generation unit generates a plurality of track displacement waveforms for each of a plurality of mutually-different speeds of a railway vehicle traveling on the first track, the second generation unit generates the vibration waveform for each of the plurality of track displacement waveforms according to each of the plurality of speeds, and the third generation unit generates the correspondence information according to each of the plurality of speeds may be used. In accordance with this, in estimation of a track displacement based on correspondence information, the information processing device can decrease uncertainty according to a speed of a first railway vehicle traveling on a first track.

As above, although embodiment of the present invention has been described in detail with reference to the drawings, a specific configuration is not limited to this embodiment, and changes, substitutions, omissions, and the like may be made without departing from the concept of the present invention.

A program for realizing the functions of arbitrary components of the devices described above (for example, the measurement device 10, the server 20, the information processing device 30, and the like) may be recorded on a computer-readable recording medium, and a computer system may be caused to read and execute the program. The "computer system" described here is assumed to include an operating system (OS) and hardware such as peripheral devices. In addition, the "computer-readable recording medium" represents a storage device including a portable medium such as a flexible disk, a magneto-optical disk, a read only memory (ROM), or a compact disk (CD)-ROM, a hard disk built in a computer system, and the like. Furthermore, the "computer-readable recording medium" includes a medium storing a program for a fixed time such as a volatile memory (for example, a random access memory (RAM)) disposed inside a computer system that becomes a server or a client in a case in which a program is transmitted through a network such as the internet or a communication line such as a telephone line.

The program described above may be transmitted from a computer system storing this program in a storage device or the like to another computer system through a transmission medium or a transmission wave in a transmission medium. Here, the "transmission medium" transmitting a program represents a medium having an information transmitting function such as a network (communication network) including the Internet and the like or a communication circuit line (communication line) including a telephone line.

The program described above may be used for realizing a part of the functions described above. In addition, the program described above may be a program realizing the functions described above by being combined with a program recorded in the computer system in advance, a so-called a differential file (differential program).

### [Reference Signs List]

1 Information processing system
10 Measurement device
20 Server
30 Information processing device
31 Processor
32 Storage unit
33 Input receiving unit
34 Communication unit
35 Display unit
36 Control unit
361 Reception unit
362 First generation unit
363 Second generation unit
364 Third generation unit
365 Estimation unit
366 Display control unit
R Track
T Railway vehicle

## Claims

1. An information processing device comprising:
a first generation unit configured to set a waveform of a wave representing changes of track displacement from a start point of a first track, on which a railway vehicle travels, to an end point of the first track as a track displacement waveform and generate a plurality of track displacement waveforms different from each other;
a second generation unit configured to generate, for each of the plurality of track displacement waveforms generated by the first generation unit, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform; and
a third generation unit configured to generate correspondence information representing a correlation between a magnitude of the track displacement and a magnitude of the vibration, based on the plurality of track displacement waveforms generated by the first generation unit and the vibration waveform generated for each of the plurality of track displacements by the second generation unit.

2. The information processing device according to claim 1,
wherein an interval between the start point and the end point is divided into a plurality of sections,
the first generation unit generates track displacement information representing track displacement of each of the plurality of sections for each of the plurality of generated track displacement waveforms,
the second generation unit generates vibration information representing a magnitude of a vibration of each of the plurality of sections for each vibration waveform generated for each of the plurality of track displacement waveforms, and
the third generation unit generates the correspondence information based on the track displacement information of each of the plurality of sections generated by the first generation unit and the vibration information of each of the plurality of sections generated by the second generation unit.

3. The information processing device according to claim 2,
wherein the first generation unit identifies a maximum value of the track displacement of each of the plurality of sections as track displacement of each of the plurality of sections, and
the second generation unit identifies a maximum value of a magnitude of the vibration of each of the plurality of sections as a magnitude of the vibration of each of the plurality of sections.

4. The information processing device according to claim 2 or 3, wherein the third generation unit generates information representing a regression curve as the correspondence information using a regression analysis based on a scatter diagram of the track displacement information of each of the plurality of sections generated by the first generation unit and the vibration information of each of the plurality of sections generated by the second generation unit.

5. The information processing device according to claim 4, wherein the third generation unit uses Gaussian process regression as the regression analysis.

6. The information processing device according to any one of claims 2 to 5, further comprising:
a storage unit configured to store the correspondence information is stored; and
an estimation unit configured to estimate the track displacement of each of the plurality of sections based on target vibration waveform information representing a waveform of a wave representing changes of a vibration estimated to be generated from the start point to the end point in traveling of a first railway vehicle on the first track and the correspondence information stored in the storage unit.

7. The information processing device according to any one of claims 1 to 6,
wherein the first generation unit generates a plurality of track displacement waveforms for each of a plurality of mutually different speeds of a railway vehicle traveling on the first track,
the second generation unit generates the vibration waveform for each of the plurality of track displacement waveforms according to each of the plurality of speeds, and
the third generation unit generates the correspondence information according to each of the plurality of speeds.

8. An information processing method comprising:
a first generation step of setting a waveform of a wave representing changes of track displacement from a start point of a first track, on which a railway vehicle travels, to an end point of the first track as a track displacement waveform and generating a plurality of track displacement waveforms different from each other;
a second generation step of generating, for each of the plurality of track displacement waveforms generated in the first generation step, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform; and
a third generation step of generating correspondence information representing a correlation between a magnitude of the track displacement and a magnitude of the vibration, based on the plurality of track displacement waveforms generated in the first generation step and the vibration waveform generated for each of the plurality of track displacements in the second generation step.

9. A program for causing a computer to execute:
a first generation step of setting a waveform of a wave representing changes of track displacement from a start point of a first track, on which a railway vehicle travels, to an end point of the first track as a track displacement waveform and generating a plurality of track displacement waveforms different from each other;
a second generation step of generating, for each of the plurality of track displacement waveforms generated in the first generation step, a vibration waveform that is a waveform of a wave representing changes of a vibration estimated to be generated from the start point to the end point in a railway vehicle virtually traveling on the first track in a case in which the waveform of the wave representing the track displacement of the first track from the start point to the end point coincides with the waveform represented by the track displacement waveform; and
a third generation step of generating correspondence information representing a correlation between a magnitude of the track displacement and a magnitude of the vibration, based on the plurality of track displacement waveforms generated in the first generation step and the vibration waveform generated for each of the plurality of track displacements in the second generation step.
